Europäisches Patentamt

(19) European Patent Office

Office européen des brevets

(11) Numéro de publication: **0 241 957**
**B1**

(12) **FASCICULE DE BREVET EUROPEEN**

(45) Date de publication du fascicule du brevet:
**19.07.89**

(21) Numéro de dépôt: **87200387.6**

(22) Date de dépôt: **03.03.87**

(51) Int. Cl.⁴: **B29C 65/02**

(54) Procédé et dispositif pour l'assemblage de deux films, notamment films de quelques microns d'épaisseur.

(30) Priorité: **11.03.86 FR 8603553**

(43) Date de publication de la demande:
**21.10.87 Bulletin 87/43**

(45) Mention de la délivrance du brevet:
**19.07.89 Bulletin 89/29**

(84) Etats contractants désignés:
**BE CH DE ES FR GB GR IT LI LU NL**

(56) Documents cités:
**FR-A- 1 339 154**
**US-A- 3 138 513**
**US-A- 3 582 421**
**US-A- 3 729 363**

(73) Titulaire: **CENTRE NATIONAL D'ETUDES SPATIALES**
**(C.N.E.S.) Etablissement public, scientifique et,**
**technique à caractère industriel et commercial 2, place**
**Maurice-Quentin, F-75039 Paris Cédex 01(FR)**

(72) Inventeur: **Regipa, Robert, 226 avenue Saint-Exupéry**
**Bâtiment Provence, F-31400 Toulouse(FR)**

(74) Mandataire: **Barre, Philippe, Cabinet**
**Barre-Gatti-Laforgue 95 rue des Amidonniers,**
**F-31069 Toulouse Cédex(FR)**

ACTORUM AG

**Description**

L'invention concerne un procédé d'assemblage de deux films, notamment films de quelques microns d'épaisseur. Cette invention s'étend à un dispositif d'assemblage de deux films mettant en oeuvre ce procédé.

Divers procédés d'assemblage de films sont actuellement connus. Ces procédés permettent d'assembler longitudinalement des films de quelques dizaines à quelques centaines de microns d'épaisseur, la jonction étant ou non renforcée au moyen d'une bande de renfort longitudinale. Parmi ces procédés on peut, par exemple, citer un procédé consistant à réaliser des soudures à plat dites "en peeling", les deux films étant disposés l'un sur l'autre, leurs bords à assembler alignés. Une bande de renfort, plane ou constituée d'un ruban plié peut en outre être assemblée avec les deux films. Un autre procédé consiste à disposer les films bord à bord et à les assembler au moyen d'un ruban de recouvrement disposé à plat, à cheval sur les deux films. Tous ces procédés permettent, avec plus ou moins de difficultés, d'assembler des films dont l'épaisseur minimale peut atteindre environ 15 microns avec des films en polyéthylène. Cependant, ils ne permettent pas d'assembler des films d'épaisseur inférieure et notamment des films en polyester de faible épaisseur. En effet, la manipulation de ces films ultra-minces et leur assemblage sont extrêmement délicats, la moindre amorce de déchirure pouvant entraîner une détérioration totale des films. Tous ces procédés, nécessitant à un moment donné une manipulation du film, encore démuni de toute protection, ne permettent donc pas de garantir la bonne qualité de l'assemblage.

Or, l'intérêt des films en polyester n'est pas négligeable, du fait de la résistance élevée de cette matière. En effet, à épaisseur égale, un film en polyester est dix fois plus résistant qu'un film en polyéthylène. Cette donnée prend toute son importance dans le domaine des ballons spatiaux, où le meilleur compromis résistance-légèreté est recherché, afin de permettre le transport de charges les plus élevées possibles à une altitude la plus importante possible. Pour des raisons de résistance, l'utilisation du polyéthylène interdit l'utilisation de films trop minces (inférieures à 15 microns) car le peu de résistance circonférentielle de ces films peut entraîner la ruine des ballons, et ceci malgré la confection de ballons de forme naturelle sans tension circonférentielle, du moins dans le domaine statique. En effet, dans la pratique, on constate l'apparition de forces dynamiques qui créent des tensions circonférentielles non négligeables. De ce fait, les ballons actuels sont, par exemple, aptes à emporter emporter une charge de 500 kilogrammes à une altitude de 45 kilomètres seulement, le poids mort de l'enveloppe étant de l'ordre de 1 000 kg. En comparaison et dans les mêmes conditions, un ballon en polyester ultra-mince dont le poids mort est de 350 kg seulement, pourrait emporter la même charge à 55 km d'altitude.

La présente invention se propose donc de pallier les inconvénients des procédés ci-dessus évoqués et de fournir un procédé d'assemblage dont l'objectif essentiel est de permettre l'assemblage de deux films, en un matériau tel que polyester, dont l'épaisseur minimale peut être comprise entre 3 et 5 microns, et ceci sans risque d'amorce de déchirure.

Un autre objectif de l'invention est de réaliser une enveloppe, pour ballon spatial, en polyester de 3 à 5 microns d'épaisseur.

A cet effet, le procédé, conforme à l'invention, d'assemblage par thermoscellage de deux films, en particulier de quelques microns d'épaisseur, est du type consistant à présenter les films avec leur surface plane en regard, les bords à assembler étant sensiblement alignés, et à insérer entre lesdits films un ruban d'assemblage longitudinal appelé à réaliser l'assemblage.

Selon la présente invention, ce procédé consiste:
- à amener un premier film à se déployer le long de sa direction longitudinale en bordant un bord longitudinal dudit film au moyen d'un ruban d'assemblage,
- à fixer un ruban plan, dit de positionnement, sur la face du ruban d'assemblage opposée au premier film,
- à utiliser ledit ruban de positionnement pour assurer la manipulation du premier film et l'alignement du bord longitudinal bordé en regard d'un bord longitudinal d'un deuxième film,
- à amener le deuxième film à se déployer le long de sa direction longitudinale en séparant au fur et à mesure de ce déploiement le ruban plan de positionnement du ruban d'assemblage scellé sur le premier film, et en assemblant dans un deuxième temps le bord longitudinal du deuxième film avec la face externe du ruban d'assemblage ainsi libérée.

Ainsi, le premier film est bordé directement lors de son déploiement sur une table d'assemblage. Si l'on excepte l'extrémité longitudinale destinée à être fixée sur la table d'assemblage puis découpée, tel qu'on le verra plus loin, la totalité du film est donc immédiatement protégée contre toute amorce de déchirure.

Ainsi protégé, ce film peut alors être manipulé en utilisant le ruban de positionnement comme organe de préhension. Ce ruban est ainsi utilisé pour aligner le bord à assembler du film ainsi bordé avec le bord à assembler d'un deuxième film ; les deux films sont ensuite assemblés directement lors du déploiement du deuxième film sur le plan horizontal, grâce notamment à la séparation du ruban de positionnement et du ruban d'assemblage. La zone de jonction renforcée longitudinalement par le ruban d'assemblage garantit ensuite contre tout risque de détérioration de l'assemblage.

Généralement, le ruban d'assemblage est plié sur lui-même autour d'un axe de pliage longitudinal et comprend dans cette position repliée deux faces internes en regard n'adhérant pas l'une sur l'autre et deux faces externes opposées aptes à adhérer avec les films à assembler et avec le ruban plan de positionnement.

Ce ruban plié permet de disposer les films l'un sur l'autre tout en réalisant un assemblage ne travaillant pas à l'arrachement ce qui aurait été le cas si l'on avait utilisé un ruban d'assemblage plan non plié. De plus, lors de la confection d'une enveloppe, après le déploiement des films assemblés, les rubans d'assemblage forment des bandes de renfort scellées à plat, ne faisant pas saillie sur l'enveloppe et aptes à supporter des efforts selon toutes les directions.

Selon un mode de mise en oeuvre préférentiel, le ruban de positionnement est en un même matériau que le ruban d'assemblage, et le procédé consiste à chauffer un tronçon de film et de ruban d'assemblage à une température déterminée permettant leur assemblage, et à refroidir partiellement le tronçon ainsi assemblé avant l'assemblage avec le ruban de positionnement, de façon à obtenir un état de simple accolement entre le ruban d'assemblage et ledit ruban plan de positionnement.

Ce mode de mise en oeuvre permet ainsi de séparer facilement le ruban de positionnement du ruban d'assemblage sans risquer de détériorer l'assemblage initial de ce ruban d'assemblage avec le film.

Ce procédé peut notamment être avantageusement utilisé pour l'assemblage de films en polyester. Le ruban d'assemblage plié est alors réalisé en polyester, ses faces externes étant recouvertes d'une résine thermo-réactivable à une température inférieure à la température de fusion du polyester ; le ruban de positionnement est également en polyester.

L'épaisseur des films à assembler peut être réduite grâce à ce procédé à une valeur comprise entre 3 et 5 microns ; le ruban d'assemblage est alors, préférentiellement, d'une épaisseur comprise entre 10 et 15 microns, permettant l'obtention d'un assemblage renforcé. Le ruban de positionnement est quant à lui d'une épaisseur de l'ordre de quelques dizaines de microns lui conférant une raideur permettant d'assurer le positionnement du film à assembler tel qu'on le verra plus loin. En outre, la résine thermo-réactivable à chaud est préférentiellement une résine de polyester.

Une des applications de ce procédé est la fabrication d'enveloppes à partir de fuseaux longitudinaux de formes adaptées à la forme de l'enveloppe à obtenir. Selon la présente invention, le procédé employé pour l'assemblage de deux fuseaux consiste alors :

- à amener un premier fuseau à se déployer sur un support longitudinal en bordant au moins un de ses bords longitudinaux au moyen d'un ruban d'assemblage et d'un ruban de positionnement,
- à amener un deuxième fuseau à se déployer sur le support longitudinal avec un de ses bords aligné avec un bord du premier fuseau et à réaliser simultanément lors de ce déploiement :
. l'assemblage des bords alignés précités des premier et deuxième fuseaux, après séparation du ruban de positionnement et du ruban d'assemblage,
. le bordage de l'autre bord longitudinal du deuxième fuseau au moyen d'un ruban d'assemblage et d'un ruban de positionnement.

A partir de ces opérations élémentaires, la fabrication de l'enveloppe consiste alors :

- à amener un fuseau à se déployer tout en bordant les deux bords longitudinaux dudit fuseau au moyen d'un ruban d'assemblage et d'un ruban plan de positionnement,
- à positionner au moyen du ruban plan de positionnement un des bords longitudinaux dudit fuseau en regard d'un bord longitudinal non bordé d'un deuxième fuseau,
- à amener le deuxième fuseau à se déployer en assemblant après séparation du ruban de positionnement les bords en regard des premier et deuxième fuseaux et en bordant simultanément le bord libre dudit deuxième fuseau au moyen d'un ruban d'assemblage et d'un ruban plan de positionnement,
- à renouveler cette opération pour la totalité moins une de fuseaux à assembler,
- à dégager les bords libres bordés du premier et du dernier fuseau et à assembler, après séparation du ruban de positionnement, lesdits bords avec un dernier fuseau non bordé amené à être déployé.

Ce procédé de fabrication présente de nombreux avantages. Tout d'abord et surtout, il permet la réalisation d'une enveloppe sur une seule table d'assemblage sans avoir à toucher et manipuler les fuseaux constituant celle-ci, si ce n'est par l'intermédiaire du ruban de positionnement. L'enveloppe obtenue présente en outre, en fin d'opération, la forme d'une gaine pliée dont la largeur correspond à la largeur d'un fuseau, d'où la suppression de manutentions de cette enveloppe en vue de son pliage et donc des risques de déchirement.

L'invention s'étend à un dispositif pour l'assemblage de deux films du type comprenant une table d'assemblage destinée au déploiement des films, des moyens d'alimentation en films, des moyens d'alimentation en bande de renfort et un ensemble mobile apte à se déplacer longitudinalement au-dessus de la table d'assemblage, et portant, d'une part, des moyens de positionnement adaptés pour aligner les bords à assembler des films et la bande de renfort, et, d'autre part, des moyens de thermo-scellage desdits films et bande de renfort.

Selon la présente invention, ce dispositif est caractérisé en ce que :
. les moyens d'alimentation en bande de renfort sont constitués de moyens d'alimentation en un ruban d'assemblage et de moyens d'alimentaiton en un ruban plan, dit de positionnement,
. les moyens de thermoscellage sont adaptés pour :
- sceller le ruban d'assemblage sur le bord longitudinal d'un film, dit premier film,
- sceller le ruban de positionnement ou le bord longitudinal d'un film, dit deuxième film, sur la face du ruban d'assemblage opposée au premier film,
. les moyens de positionnement comprennent :
- des moyens de guidage adaptés pour positionner dans un même alignement un bord longitudinal du premier film, le ruban d'assemblage et le ruban de positionnement,
- des moyens de positionnement du ruban de positionnement, adaptés pour positionner dans un même alignement le bord longitudinal du premier film bordé au moyen du ruban d'assemblage et du ruban de positionnement, avec un bord à assembler du deuxième film,
. des moyens de séparation du ruban de positionnement et du ruban d'assemblage sont agencés sur l'ensemble mobile en vue de séparer les rubans d'assemblage et de positionnement, de façon à autoriser l'assemblage des bords de deux films alignés par l'intermédiaire des moyens de positionnement du ruban de positionnement.

D'autres caractéristiques et avantages de l'invention se dégageront de la description détaillée qui suit et de l'examen des dessins annexés qui en présentent à titre d'exemple non limitatif un mode de réalisation préférentiel. Sur ces dessins qui font partie intégrante de la présente description :

- les figures 1 et 2 sont des coupes schématiques illustrant les deux étapes successives permettant l'assemblage de deux films selon un procédé conforme à l'invention,
- les figures 3a, 3b, 3c, 3d, 3e sont des schémas illustrant la réalisation d'une enveloppe, selon un procédé conforme à l'invention,
- la figure 4 est une vue en perspective d'un dispositif destiné à l'assemblage de deux films conformément à l'invention, sur laquelle certains carters de protection sont retirés,
- la figure 5 en est une coupe verticale par un plan AA,
- la figure 6 en est une coupe horizontale brisée par un plan BB.

Pour simplifier la description, les termes amont et aval seront utilisés avec comme référence le sens de déplacement de l'ensemble mobile.

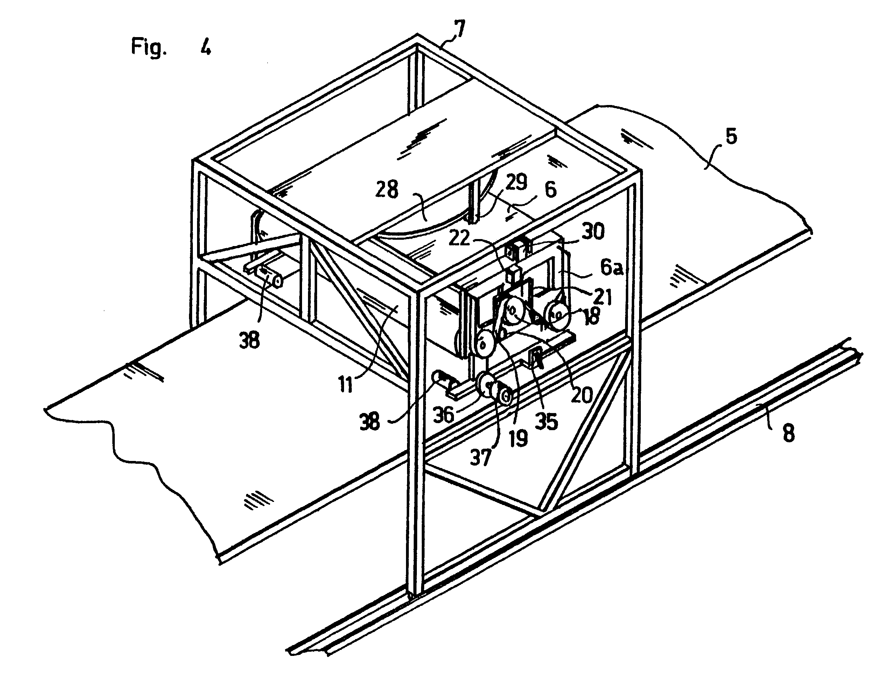

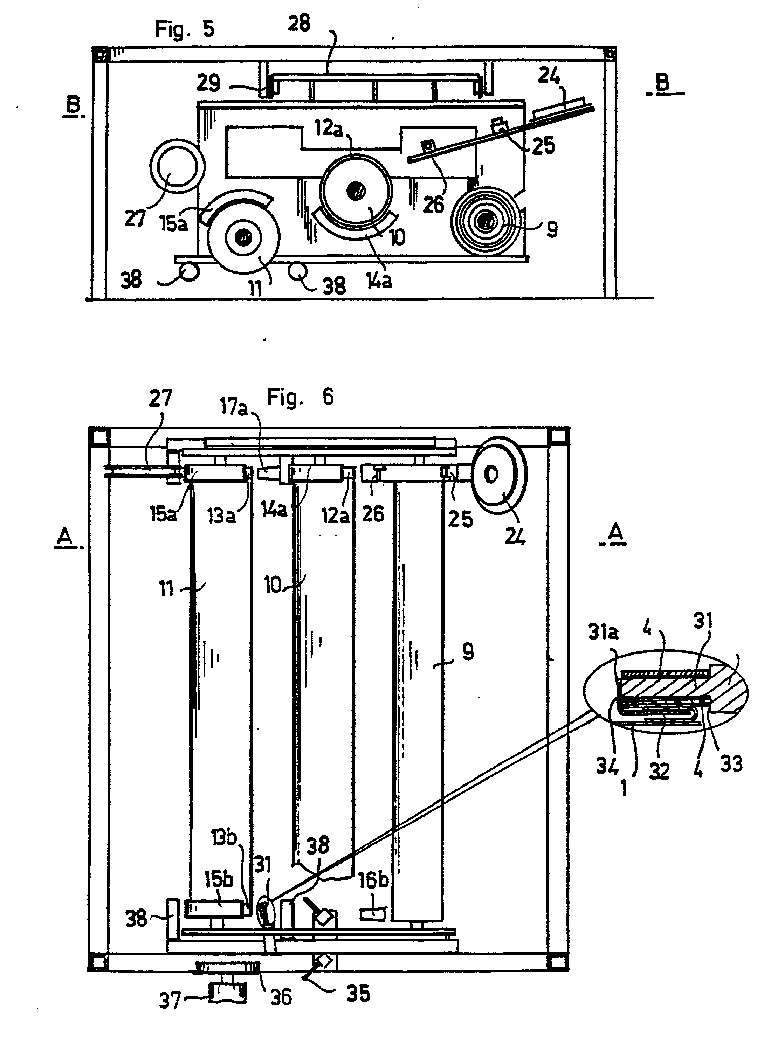

Le dispositif d'assemblage représenté aux figures 4, 5, 6 est destiné à l'assemblage par thermoscellage de films en polyester dont l'épaisseur minimale peut atteindre une valeur comprise entre 3 et 5 microns. Il est utilisé, en particulier, pour la réalisation d'une enveloppe cylindrique, notamment pour ballon spatial, réalisée à partir de fuseaux longitudinaux en polyester et telle que, par exemple, décrite dans le brevet français n° 80.00343.

Ce dispositif comprend une table d'assemblage 5 destinée au déploiement des films et un châssis 7 mobile par rapport à cette table. Ce châssis est guidé dans deux rails parallèles 8 disposés de part et d'autre de la table d'assemblage 5, de façon à permettre son déplacement longitudinal le long de cette table.

Au-dessus de la table d'assemblage 5, le châssis 7 est porteur d'un ensemble compact 6 comprenant deux faces latérales parallèles 6a entre lesquelles sont disposés deux cylindres 10, 11 et un rouleau 9 sur lequel est conditionné le film. Les axes de ces cylindres 10, 11 et de ce rouleau 9 sont parallèles entre eux et perpendiculaires à la direction de déplacement de l'ensemble mobile.

Le rouleau 9 est positionné en aval des deux cylindres 10, 11. Ces deux cylindres 10, 11, sont, quant à eux, disposés à des niveaux différents au-dessus de la table d'assemblage 5 et constituent des moyens de guidage entre lesquels le film est amené à défiler, de façon à posséder une surface de contact avec l'un et l'autre cylindre lors de son déploiement sur la table.

Ces deux cylindres 10, 11 sont préférentiellement réalisés en aluminium et sont dotés chacun de deux bagues aluminium 12a, 12b, 13a, 13b, espacées d'une distance équivalente à la largeur du film et isolées de la paroi périphérique de ces cylindres par un isolant thermique. En regard de chacune de ces bagues, est disposé un four annulaire 14a, 14b, 15a, 15b comportant une première portion parallèle à la paroi périphérique des cylindres 10, 11 et s'étendant sur une portion d'arc de cercle équivalent sensiblement à la zone du cylindre ne se trouvant pas en contact avec le film lors du déploiement de celui-ci.

Ces fours annulaires 14, 15 comportent également un retour vertical possédant la forme d'une couronne disposée parallèlement à l'extrémité longitudinale des cylindres 10, 11.

Ces fours annulaires 14, 15 sont alimentés en air chaud et sont disposés à proximité immédiate des cylindres 10, 11 de façon que la température des bagues 12, 13 soit uniforme et indépendante des variations de température extérieure. De plus, la température de l'air chaud est régulée en fonction de la température régnant à l'intérieur de ces fours 14, 15, de façon à obtenir une température inférieure à la température d'assemblage des films.

Le complément de chauffage est apporté par des buses 16a, 16b, 17a, 17b de préchauffage disposées en regard des bagues 12, 13 et alimentées en air chaud à partir d'une dérivation de la canalisation d'alimentation des fours annulaires 14, 15. La différence de température entre l'air alimentant les buses 16, 17 et l'air alimentant les fours 14, 15 est obtenue en disposant un complément d'isolation sur la dérivation alimentant les buses.

Les cylindres 10, 11 et le rouleau 9 sont également dotés de moyens de blocage en rotation permettant notamment d'éviter la création de plis due à l'inertie des cylindres en rotation, lors de l'arrêt de la machine. Ces moyens de blocage comprennent trois poulies 18 situées chacune dans le prolongement de l'arbre de rotation des cylindres 10, 11 et du rouleau 9. Ces trois poulies 18 sont reliées au moyen d'une courroie 19 dont les deux extrémités sont fixées sur une des faces latérales 6a de l'ensemble mobile 6.

Ces moyens de blocage comprennent également deux poulies 20 de renvoi disposées sous la courroie 19, symétriquement de part et d'autre du cylindre central 10. Ces deux poulies 20 sont reliées, au-dessus de ce cylindre 10, par un palonnier 21 positionné en regard d'un électro-aimant 22 apte à provoquer le déplacement de celui-ci suivant un axe vertical. La mise sous tension de l'électro-aimant 22 provoque donc une traction sur les poulies 20 de renvoi et par voie de conséquence une tension de la courroie 19 et un blocage en rotation synchronisé des cylindres 10, 11 et du rouleau 9.

La commande d'arrêt du déplacement du châssis 7 est donc couplée avec une commande permettant la mise sous tension de l'électro-aimant 22. Simultanément, et afin de ne pas détériorer la portion de film en contact avec les bagues 12, 13 des cylindres 10 et 11, un signal entraîne la fermeture d'une électro-vanne positionnée sur la canalisation d'alimentation en air des buses 16, 17 de chauffage.

L'ensemble compact 6 comprend également des moyens d'alimentation en un ruban d'assemblage 3 en polyester de 10–15 microns d'épaisseur et d'une dizaine de millimètres de large. Ce ruban d'assemblage 3 possède une face recouverte d'une résine de polyester thermo-réactivable à une température inférieure à la température de fusion du polyester mais supérieure à la température apportée par les fours annulaires 14, 15.

Ces moyens d'alimentation sont constitués de deux ensembles identiques disposés chacun en regard d'une bague 12 du cylindre central 10 et comprennent une bobine 24 de conditionnement sur laquelle le ruban d'assemblage 3 est enroulé. Ils sont associés à un organe de pliage 25 doté d'une fente de dimensions adaptées pour permettre le logement de ce ruban d'assemblage dans une position où il se trouve replié sur lui-même autour d'un axe longitudinal. Cette bobine 24 et cet organe de pliage 25 sont disposés de façon à délivrer le ruban d'assemblage 3 plié, parallèlement à la direction de déplacement du châssis, dans l'alignement d'une bague 12a, 12b du cylindre central 10. Afin d'ajuster cette position transversale du ruban 3, ces moyens d'alimentation comprennent en outre un doigt de guidage 26 disposé à proximité de chaque bague 12a, 12b.

L'ensemble compact 6 comprend enfin des moyens d'alimentation 27 en un ruban plan 4 en polyester de l'ordre de 50 microns d'épaisseur et de 3–4 cm de large. Ces moyens d'alimentation comprennent deux bobines identiques 27 disposées chacune en amont et au-dessus d'une bague 13 du troisième cylindre 11 (cylindre positionné en amont). Cette bobine 27 est disposée de façon à délivrer le ruban plan 4, parallèlement à la direction de déplacement du châssis, dans l'alignement d'une bague 13a, 13b de ce troisième cylindre.

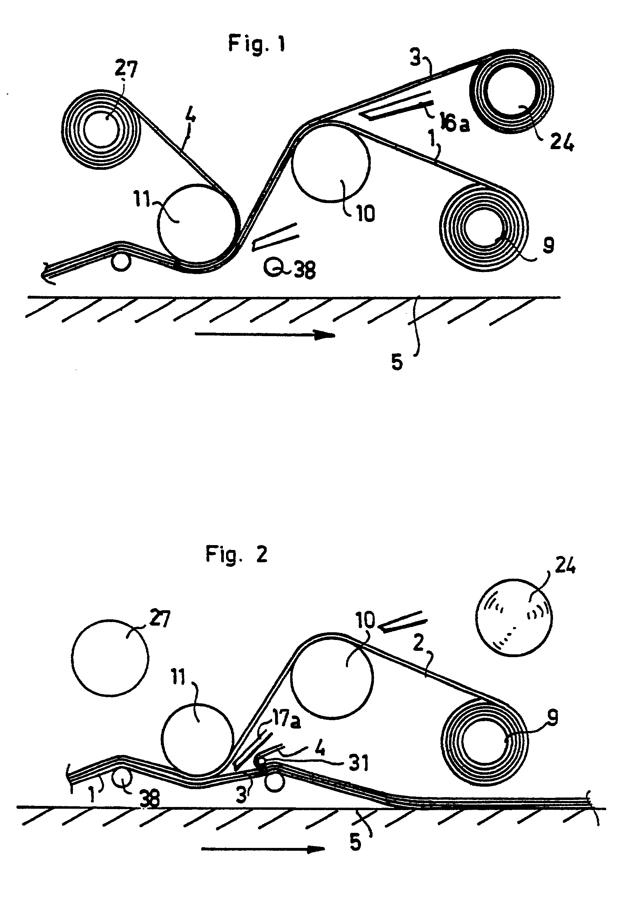

Les divers moyens d'alimentation, de guidage et de thermoscellage décrits ci-dessus permettent, dans un premier temps, l'assemblage du ruban d'assemblage 3 plié et d'un bord longitudinal d'un film et, dans un deuxième temps, l'assemblage du ruban de positionnement 4 sur l'autre face du ruban d'assemblage 3, tel que représenté à la figure 1.

Initialement, le film 1 et le ruban d'assemblage 3 sont déroulés en vue d'être fixés sur l'extrémité de la table d'assemblage 5. Ainsi, lors du déplacement du châssis 7, ce film et ce ruban sont maintenus en tension entre l'extrémité de la table et respectivement le rouleau 9 ou la bobine 24.

En outre, lors de ce déploiement initial, ce film 1 et ce ruban 3 sont guidés entre les cylindres 10 et 11 de façon à se trouver en contact avec respectivement une portion de paroi périphérique de chacun de ces cylindres.

En aval des moyens de fixation permettent de maintenir le film sur l'extrémité de la table 5, le film est ensuite protégé manuellement et transversalement au moyen d'une bande adhésive de renfort permettant de stopper les éventuelles amorces de déchirures. Cette bande adhésive délimite ainsi l'extrémité longitudinale du fuseau, la portion de film située en amont de cette bande étant destinée à être découpée et non utilisée.

Pour sa part, le ruban de positionnement 4 est également déroulé de façon à être enroulé sur un demi-tour sur le cylindre 11, puis fixé sur l'extrémité de la table.

Ces opérations préliminaires étant réalisées, le châssis mobile 7 est déplacé longitudinalement le long de la table d'assemblage 5, entraînant par là-même le déploiement du film 1 sur cette table.

Lors de ce déplacement, un four annulaire 14a (ou 14b) du cylindre 10 porte un bord longitudinal du film 1 à une température légèrement inférieure à la température de réactivation de la résine du ruban d'assemblage 3 ; l'appoint de chauffage permettant cette réactivation est apporté par la buse 16a (ou 16b) qui permet en outre de garantir un parfait assemblage, car sa position lui permet de chauffer directement les surfaces à assembler.

L'ensemble film-ruban d'assemblage ainsi obtenu se refroidit, partiellement, par convection, lors de son trajet entre les deux cylindres 10 et 11. Les fours annulaires 15 associés à ce cylindre 11 n'étant pas alimentés en air chaud, le ruban de positionnement 4 est donc ensuite scellé sur le ruban d'assemblage 3 avec une intensité moindre que l'intensité de collage entre film 1 et ruban d'assemblage 34 ; cette disposition permettra par la suite de retirer facilement ce ruban de positionnement, tel qu'on le verra ci-après.

Lorsque le châssis 7 parvient à l'extrémité opposée de la table d'assemblage 5, les différents rubans et film et l'ensemble mobile sont préparés afin de permettre un nouveau passage. Ainsi, afin de permettre le trajet retour, l'ensemble compact 6 est fixé sur le châssis 7 par l'intermédiaire de moyens d'entraînement en rotation 28, 29 adaptés pour permettre une rotation de 180° de cet ensemble. Ces moyens d'entraînement sont constitués d'une roue horizontale 28 surmontant cet ensemble compact 6 et de galets 29 solidaires du châssis 7 et supportant la roue 28 de façon à la guider en rotation. Le châssis comprend en outre deux organes de blocage 30 disposés de façon à positionner l'ensemble compact 6 dans l'une ou l'autre position de fonctionnement.

La deuxième étape de l'opération d'assemblage consiste à assembler le film 1 déployé sur la table et bordé comme décrit ci-dessus, avec un tronçon de film obtenu par déroulement du rouleau 9 de conditionnement. Afin de permettre cet assemblage, l'ensemble compact 6 comprend des moyens de positionnement du film bordé et des moyens de séparation adaptés pour séparer le ruban de positionnement 4 du ruban d'assemblage 3.

Les moyens de positionnement sont adaptés pour permettre d'aligner correctement le bord bordé du film 1 déployé sur la table d'assemblage 5 avec le bord à assembler du film 2 conditionné sur le rouleau 9.

A cet effet, ces moyens comprennent un téton 31 disposé perpendiculairement au sens de déplacement du châssis, en regard de la bague 13b du cylindre 11. L'extrémité 31a de ce téton 31 porte une aiguille 32 en forme de L dont la branche horizontale s'étend parallèlement à l'axe du téton, en-dessous de celui-ci. Ce téton 31 comprend également un épaulement 33 parallèle à la branche verticale 34 de l'aiguille 31, de façon que ces deux éléments déterminent deux surfaces de guidage 33, 34 en regard écartées d'une distance équivalente à la largeur du ruban de positionnement 4.

La position de ce téton 31 pouvant être facilement ajustée, la mise en place du ruban de positionnement 4 dans l'intervalle compris entre les deux surfaces de guidage 33, 34, la partie horizontale de l'aiguille 32 insérée dans le pli du ruban d'assemblage 3, permet d'assurer un positionnement précis du film 1 déployé sur la table en regard du deuxième film 2 à assembler.

Les moyens de séparation entre ruban de positionnement 4 et ruban d'assemblage 3 comprennent quant à eux, outre le téton 31, des moyens de renvoi constitués de deux doigts de guidage 35 disposés en aval du téton 31 avec leurs axes obliques par rapport à la direction de déplacement du châssis 7, et délimitant un angle sensiblement droit.

Le ruban de positionnement 4 peut ainsi être positionné dans l'intervalle défini par les surfaces de guidage 33, 34, puis enroulé sur un demi-tour autour du téton 31 et enfin disposé autour de chaque doigt de guidage 24 de façon à pouvoir être renvoyé vers l'extrémité de la table d'assemblage 5 en amont du châssis 7. Lors du déplacement du châssis, ce ruban 4 est donc séparé du ruban d'assemblage 3, et ce d'autant plus facilement que ces rubans sont simplement accolés.

Selon un autre mode de réalisation préférentiel, ce ruban 4 peut être ré-enroulé sur une bobine 36 réceptrice portée par l'ensemble compact 6 et entraînée en rotation au moyen d'un dispositif d'entraînement actionné par un moteur 37 à régulation de couple. Cette bobine réceptrice 36 présente l'avantage de pouvoir être récupérée et utilisée ultérieurement comme bobine émettrice 27 et évite d'avoir à fixer le ruban de positionnement en bout de table. Pour des raisons d'encombrement, cette bobine réceptrice 36 sera également utilisée en association avec les doigts de guidage 35 précités.

En outre, les deux films 1, 2 étant assemblés lors de leur mise en contact avec la bague 13b du cylindre 11, l'ensemble compact 6 comprend de part et d'autre de ce cylindre 11 deux cylindres-support 38 disposés à une hauteur par rapport à la table d'assemblage légèrement supérieure à la génératrice inférieure dudit cylindre 11.

Ces deux cylindres-support 38 sur lesquels est disposé le bord bordé du film 1 déployé sur la table d'assemblage 5 permettent donc d'obtenir une surface de contact suffisante entre la bague 13b et le tronçon de film à assembler.

La façon dont est réalisé l'assemblage proprement dit des films 1, 2 est illustrée à la figure 2. Lors de cet assemblage, seul un four annulaire 15b associé au cylindre 11 est alimenté en air chaud de façon à porter le film et le ruban d'assemblage 3 à une température légèrement inférieure à la température de réactivation de la résine de ce ruban d'assemblage 3 ; l'appoint de chauffage est apporté par une buse 17b d'air chaud qui permet en outre une meilleure mise en température des surfaces à assembler.

Les opérations préliminaires à cette deuxième phase d'assemblage consistent à dérouler le film 2 conditionné sur le rouleau 9 entre les cylindres 10 et 11, puis à le fixer sur l'extrémité de la table d'assemblage, de façon qu'il soit maintenu en tension lors de son déploiement. D'autre part, un tronçon du film 1 déployé sur la table 5 est disposé sur les cylindres de guidage 38, et son ruban de positionnement 4 est positionné dans l'intervalle de guidage 33, 34, son extrémité étant enroulée sur la bobine réceptrice 36.

Ainsi, lors du déplacement du châssis 7, le ruban de positionnement 4 assure dans un premier temps le positionnement du film 1 déployé sur la table d'assemblage 5 en regard du film 2 maintenu en tension entre l'extrémité de la table et le rouleau 9 de conditionnement, puis dans un deuxième temps, est séparé du ruban d'assemblage 3, de façon à autoriser l'assemblage entre ce ruban d'assemblage 3 et le film 2.

Lors de ces différentes opérations, aucun des deux films n'est donc directement manipulé par un opérateur et la garantie d'un assemblage parfait est donc assurée.

Les deux étapes successives, illustrées aux figures 1 et 2, et permettant de réaliser l'assemblage de deux films, peuvent être réalisées plusieurs fois de suite de façon à confectionner par opérations successives une enveloppe, notamment pour ballon spatial.

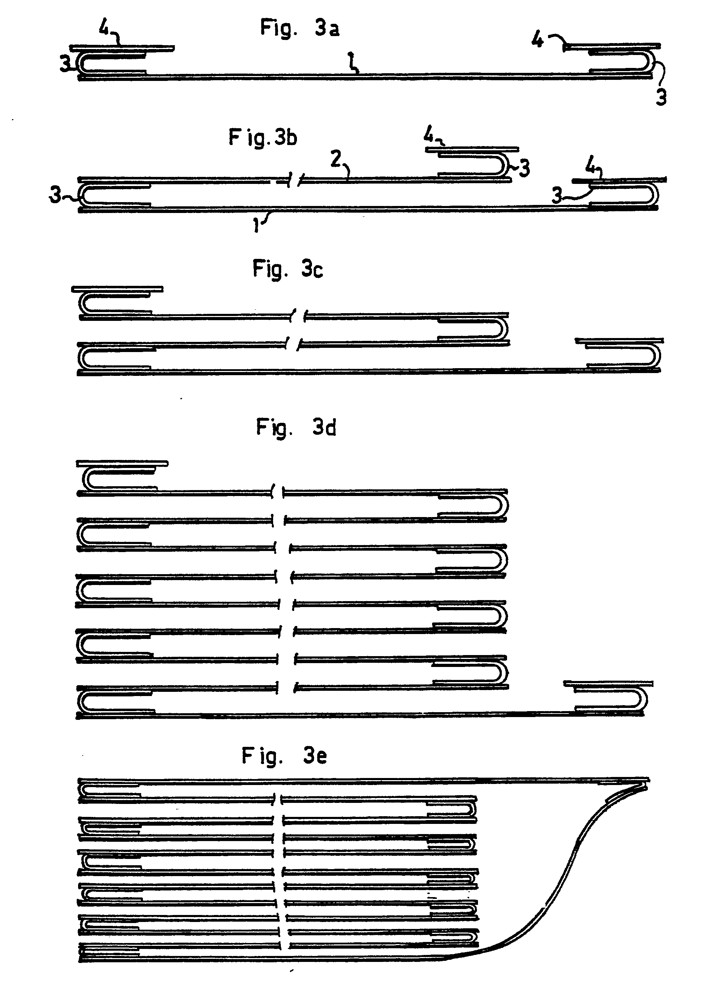

La réalisation d'une telle enveloppe nécessite plusieurs opérations successives décrites ci-dessous en référence aux figures 3a à 3e.

La première opération consiste à fixer une extrémité du film conditionné sur le rouleau 9, sur la table d'assemblage 5, et à procéder de même pour l'extrémité des rubans d'assemblage 3 et des rubans de positionnement 4.

Il est à noter que ces différentes opérations doivent être réalisées dans un ordre déterminé, de façon à permettre un positionnement du ruban d'assemblage 3 entre le film et le ruban de positionnement 4 au niveau du cylindre 11.

Le châssis 7 porteur de l'ensemble compact 6 est ensuite entreîné longitudinalement au-dessus de la table d'assemblage 5, les deux fours annulaires 14a, 14b du cylindre central 10 et les buses associées étant seuls alimentés en air chaud. Lors de ce déplacement, les rouleaux 9 et les bobines 24 et respectivement 27 sont amenés à se dévider, entraînant ainsi la fixation d'une bande de bordage constituée d'un ruban d'assemblage 3 et d'un ruban de positionnement 4 sur chaque bord longitudinal du film (figure 3a).

Lorsque le châssis mobile 7 parvient à l'extrémité de la table d'assemblage 5, le film et les deux rubans d'assemblage 3 le bordant sont coupés, puis fixés sur cette table d'assemblage, après rotation de 180° de l'ensemble mobile 6. De même, l'extrémité du film conditionné sur le rouleau est à son tour fixée sur la table d'assemblage.

Un tronçon d'un des bords longitudinaux du film 1 déployé sur la table lors du premier passage est ensuite positionné sur les cylindres-support 38, tandis que son ruban de positionnement 4 est mis en place entre les surfaces de guidage 33, 34 et que l'extrémité de ce ruban 4 est enroulée sur la bobine réceptrice 36. Dans cette position, ce bord longitudinal se trouve aligné avec un des bords longitudinaux du film 2 conditionné sur le rouleau 9. Le bord longitudinal opposé de ce film 2 est quant à lui préparé comme décrit ci-avant, de façon à permettre son renforcemenmt au moyen d'un ruban d'assemblage et d'un ruban de positionnement.

La deuxième opération consiste alors à déplacer le châssis 7, un des fours annulaires 15b du cylindre 11 et la buse associée étant alimentés en air chaud, de façon à permettre l'assemblage des bords longitudinaux en regard des films 1 et 2 ; côté opposé, par contre, seul le four annulaire 14a du cylindre 10 et la buse associée sont alimentés en air chaud de façon à permettre le bordage du deuxième bord longitudinal du film 2.

Ainsi, lors de ce deuxième passage, un des bords longitudinaux du film 2 a amené à se déployer sur la table est assemblé avec le film 1 précédemment déroulé sur la table 5, tandis que le bord longitudinal opposé de ce film 2 est bordé au moyen de rubans 3 et 4 (figure 3b).

On peut ensuite réaliser de la même façon un nombre de passages déterminé de façon à assembler de même la totalité moins une des fuseaux de l'enveloppe.

Afin de réaliser la fermeture de l'enveloppe, la dernière opération consiste à dégager les bords longitudinaux libres et bordés du premier fuseau et du dernier fuseau et à les positionnér sur les cylindres-supports 38, tandis que leur ruban de positionnement respectif 4 est mis en place entre les surfaces de guidage 33, 34.

Le châssis est ensuite entraîné, les deux fours annulaires 15a et 15b du cylindre 11 et les buses associées étant seuls alimentés en air chaud. On obtient ainsi l'assemblage des deux bords longitudinaux du film conditionné sur le rouleau 9 avec respectivement un bord longitudinal du premier et du dernier fuseau.

On constate donc que, lors de la réalisation de l'enveloppe, seules les extrémités longitudinales des différents fuseaux font l'objet de manipulations sans avoir reçu au préalable de protection. Mises à part ces extrémités, tous les fuseaux sont assemblés sans qu'à aucun moment une portion de film non munie d'un ruban de protection soit manipulée. Donc, si l'on prend la précaution de ne conserver qu'une longueur sensiblement raccourcie de fuseau, ce procédé et le dispositif adapté pour sa mise en oeuvre, permettent de réaliser une enveloppe en polyester de très faible épaisseur, en se préservant des risques de déchirure de cette enveloppe.

## Revendications

1/ - Procédé d'assemblage par thermoscellage de deux films (1, 2), en particulier de quelques microns d'épaisseur, du type consistant à présenter les films avec leur surface plane en regard, les bords à assembler étant sensiblement alignés et à insérer entre lesdits films un ruban d'assemblage longitudinal appelé à réaliser l'assemblage, ledit procédé étant caractérisé en ce qu'il consiste :
- à amener un premier film (1) à se déployer le long de sa direction longitudinale en bordant un bord longitudinal dudit film au moyen d'un ruban d'assemblage (3),
- à fixer un ruban plan (4), dit de positionnement, sur la face du ruban d'assemblage (3) opposée au premier film (1),
- à utiliser ledit ruban de positionnement (4) pour assurer la manipulation du premier film (1) et l'alignement du bord longitudinal bordé en regard d'un bord longitudinal d'un deuxième film (2),
- à amener le deuxième film à se déployer le long de sa direction longitudinale en séparant au fur et à mesure de ce déploiement le ruban plan (4) de positionnement du ruban d'assemblage (3) scellé sur le premier film, et en assemblant dans un deuxième temps le bord longitudinal du deuxième film (2) avec la face externe du ruban d'assemblage (3) ainsi libérée.

2/ - Procédé selon la revendication 1, consistant à utiliser un ruban d'assemblage (3) plié sur lui-même autour d'un axe de pliage longitudinal et comprenant dans cette position repliée deux faces internes en regard n'adhérant pas l'une sur l'autre et deux faces opposées aptes à adhérer avec les films à assembler et avec le ruban plan de positionnement (4).

3/ - Procédé selon l'une des revendications 1 ou 2, consistant à utiliser un ruban de positionnement (4) en un même matériau que le ruban d'assemblage (3), ledit procédé étant caractérisé en ce qu'il consiste à chauffer un tronçon du premier film (1) et du ruban d'assemblage (3) à une température déterminée permettant leur assemblage, et à refroidir partiellement le tronçon ainsi assemblé avant l'assemblage avec le ruban de positionnement (4) de façon à obtenir un état de simple accolement entre lesdits ruban d'assemblage et ruban de positionnement.

4/ - Procédé selon l'une des revendications 1, 2 ou 3 d'assemblage de films en polyester, caractérisé en ce qu'il consiste à utiliser un ruban d'assemblage (3) plié en polyester possédant des faces externes recouvertes d'une résine thermo-réactivable à une température inférieure à la température de fusion du polyester, et un ruban de positionnement (4) en polyester.

5/ - Procédé selon la revendication 4 d'assemblage de deux films en polyester d'épaisseur sensiblement comprise entre 3 et 5 microns, caractérisé en ce qu'il consiste à utiliser un ruban d'assemblage (3) d'épaisseur sensiblement comprise entre 10 et 15 microns, dont les faces externes sont recouvertes d'une résine de polyester thermo-réactivable et un ruban de positionnement (4) d'épaisseur de l'ordre de quelques dizaines de microns.

6/ - Procédé selon l'une des revendications 1, 2, 3, 4 ou 5 d'assemblage de deux fuseaux en vue de la fabrication d'une enveloppe à partir de fuseaux longitudinaux de formes adaptées à la forme de l'enveloppe, caractérisé en ce qu'il consiste :
- à amener un premier fuseau à se déployer sur un support longitudinal (5) en bordant au moins un de ses bords longitudinaux au moyen d'un ruban d'assemblage (3) et d'un ruban de positionnement (4),
- à amener un deuxième fuseau à se déployer sur le support longitudinal avec un de ses bords aligné avec un bord bordé du premier fuseau et à réaliser simultanément lors de ce déploiement :
. l'assemblage des bords alignés précités des premier et deuxième fuseau, après séparation du ruban de positionnement (4) et du ruban d'assemblage (3),

. le bordage de l'autre bord longitudinal du deuxième fuseau au moyen d'un ruban d'assemblage (3) et d'un ruban de positionnement (4).

7/ - Procédé selon la revendication 6 pour la fabrication d'une enveloppe, caractérisé en ce qu'il consiste :

- à amener un fuseau à se déployer en bordant les deux bords longitudinaux dudit fuseau au moyen d'un ruban d'assemblage (3) et d'un ruban plan de positionnement (4),

- à aligner au moyen du ruban plan de positionnement (4) un des bords longitudinaux dudit fuseau en regard d'un bord longitudinal d'un deuxième fuseau,

- à amener le deuxième fuseau à se déployer en assemblant après séparation du ruban de positionnement (4) les bords en regard des premier et deuxième fuseaux et en bordant simultanément le bord libre dudit deuxième fuseau au moyen d'un ruban d'assemblage (3) et d'un ruban plan de positionnement (4),

- à renouveler cette opération pour la totalité moins une de fuseaux à assembler,

- à dégager les bords libres bordés du premier et du dernier fuseau et à assembler, après séparation du ruban de positionnement (4), lesdits bords avec un dernier fuseau non bordé amené à être déployé.

8/ - Dispositif pour l'assemblage de deux films (1, 2), du type comprenant une table d'assemblage (5) destinée au déploiement des films, des moyens (9) d'alimentation en film, des moyens (24, 25, 27) d'alimentation en bande de renfort (3, 4), et un ensemble (6, 7) mobile, apte à se déplacer longitudinalement au-dessus de la table d'assemblage (5) et portant, d'une part, des moyens (10, 11, 26, 33, 34) de positionnement adaptés pour aligner les bords à assembler des films (1, 2) et la bande de renfort (3, 4) et, d'autre part, des moyens de thermoscellage (14, 15, 16, 17) desdits films et bande de renfort, ledit dispositif étant caractérisé en ce que :

- les moyens d'alimentation (24, 25, 27) en bande de renfort (3, 4) sont constitués de moyens (24, 25) d'alimentation en un ruban d'assemblage (3) et de moyens (27) d'alimentation en un ruban plan, dit de positionnement,

- les moyens de thermoscellage (14, 15, 16, 17) sont adaptés pour :

. sceller le ruban d'assemblage (3) sur le bord longitudinal d'un film (1), dit premier film,

. sceller le ruban de positionnement (4) ou le bord longitudinal d'un film (12), dit deuxième film, sur la face du ruban d'assemblage (3) opposée au premier film (1),

- les moyens de positionnement (10, 11, 26, 33, 34) comprennent :

. des moyens de guidage (10, 11, 26) adaptés pour positionner dans un même alignement un bord longitudinal du premier film (1), le ruban d'assemblage (3) et le ruban de positionnement (4),

. des moyens (33, 34) de positionnement du ruban de positionnement (4) adaptés pour positionner dans un même alignement le bord longitudinal du premier film (1) bordé au moyen du ruban d'assemblage (3) et du ruban de positionnement (4), avec un bord à assembler du deuxième film (2),

- des moyens (31, 35, 36, 37) de séparation du ruban de positionnement (4) et du ruban d'assemblage (3) sont agencés sur l'ensemble mobile (6, 7) en vue de séparer lesdits rubans d'assemblage (3) et de positionnement (4) de façon à autoriser l'assemblage des bords de deux films (1, 2) alignés par l'intermédiaire des moyens de positionnement (33, 34) du ruban de positionnement (4).

9/ - Dispositif selon la revendication 8, caractérisé en ce que les moyens de guidage (10, 11, 26) comprennent deux cylindres (10, 11) espacés d'une distance donnée et entre lesquels chaque film est amené à défiler, lors de son déploiement, de façon à posséder une surface en contact avec l'un et l'autre cylindre (10, 11).

10/ - Dispositif selon la revendication 9, caractérisé en ce que chaque cylindre (10, 11) comprend sur sa périphérie deux bagues (12, 13) en un matériau métallique, espacées d'une distance approximativement égale à la largeur d'un film et isolées thermiquement de la paroi périphérique desdits cylindres.

11/ - Dispositif selon la revendication 10, caractérisé en ce que les moyens de thermoscellage (14, 15, 16, 17) comprennent des fours annulaires (14, 15) raccordés sur une canalisation d'alimentation en air chaud et disposés à proximité immédiate de la paroi périphérique des cylindres (10, 11) en regard des bagues (12, 13).

12/ - Dispositif selon la revendication 11, caractérisé en ce que la température des fours annulaires (14, 15) est inférieure à la température d'assemblage, lesdits fours annulaires étant associés à des buses (16,17) de chauffage disposées en regard des bagues (12, 13) et alimentées en un air chaud dont la température est adaptée pour permettre l'assemblage.

13/ - Dispositif selon l'une des revendications précédentes, caractérisé en ce que les moyens d'alimentation (24, 25) en ruban d'assemblage (3) comprennent un organe de pliage (25) adapté pour délivrer un ruban d'assemblage (3) replié sur lui-même autour d'un axe longitudinal.

14/ - Dispositif selon la revendication 10, caractérisé en ce que les moyens de positionnement (33, 34) du ruban de positionnement (4) comprennent :

- deux organes de guidage positionnés sensiblement dans l'alignement d'une bague (13) d'un cylindre (11) et possédant deux surfaces de guidage (33, 34) en regard, écartées d'une distance équivalente à la largeur du ruban de positionnement (4) et entre lesquelles ledit ruban est appelé à être positionné,

- une aiguille (32) s'étendant orthogonalement aux surfaces de guidage de façon à être logé dans le pli du ruban d'assemblage (3) lors du positionnement du ruban de positionnement (4) entre lesdites surfaces de guidage.

15/ - Dispositif selon la revendication 14, caractérisé en ce que les moyens de séparation (31, 35, 36, 37) du ruban de positionnement (4) comprennent :

- un téton (31) reliant les deux surfaces de guidage (33, 34) et autour duquel le ruban de positionnement (4) est enroulé sur un demi-tour,

- des moyens de renvoi (35) disposés en aval du téton (31) et adaptés pour permettre le renvoi du ruban de positionnement (4) vers l'extrémité de la table d'assemblage située en amont de l'ensemble mobile (6, 7),

- des moyens de fixation du ruban de positionnement sur l'extrémité de la table d'assemblage.

16/ - Dispositif selon la revendication 15, caractérisé en ce que les moyens de renvoi sont constitués de deux doigts de guidage 35 possédant des axes longitudinaux sécants déterminant un angle sensiblement droit.

17/ - Dispositif selon la revendication 14, caractérisé en ce que les moyens de séparation (31, 35, 36, 37) du ruban de positionnement (4) comprennent :

- un téton (31) reliant les deux surfaces de idage et autour duquel le ruban de positionnement est enroulé sur un demi-tour,

- une bobine réceptrice (36) adaptée pour permettre un reconditionnement du ruban de positionnement (4) et associée à des moyens d'entraînement (37) en rotation asservis à la vitesse de déplacement de l'ensemble mobile (6, 7).

18/ - Dispositif selon la revendication 9, dans lequel le film se présente sous forme d'un rouleau (9) et les rubans d'assemblage (3) et de positionnement (4) se présentent sous la forme de bobines (24, 27), lesdits rouleau et bobines étant portés par l'ensemble mobile (6, 7).

19/ - Dispositif selon la revendication 18, caractérisé en ce qu'il comprend des moyens de blocage (18-22) en rotation des cylindres (10, 11) et du rouleau (9) adaptés pour bloquer, en synchronisme, lesdits cylindres et rouleau lors de l'arrêt du déplacement de l'ensemble mobile (6, 7).

20/ - Dispositif selon la revendication 19, caractérisé en ce que les moyens de blocage (18-22) comprennent :

- trois poulies (18) fixées respectivement dans le prolongement de l'arbre de chaque cylindre (10, 11) et rouleau (9),

- une courroie (19) reliant les trois poulies (18) et possédant des extrémités fixées sur l'ensemble-mobile (6, 7),

- deux poulies (20) de renvoi positionnées contre la courroie (19) et reliées par un palonnier (21),

- des moyens de déplacement (22) vertical du palonnier (21) adaptés pour entraîner un déplacement dudit palonnier visant à tendre la courroie (19) lors de l'arrêt du déplacement de l'ensemble-mobile (6, 7).

21/ - Dispositif selon les revendications 12 et 21 prises ensemble, caractérisé en ce qu'il comprend des moyens d'asservissement liés à la commande d'arrêt du déplacement de l'ensemble-mobile (6, 7) et adaptés, lors de l'arrêt dudit ensemble-mobile, pour commander :

- l'arrêt de l'alimentation en air des buses de chauffage (16, 17),

- la mise en action des moyens de déplacement (22) vertical du palonnier (21).

22/ - Dispositif selon la revendication 18, caractérisé en ce qu'il comprend des moyens d'entraînement (28, 29, 30) en rotation de l'ensemble mobile, adaptés pour permettre une rotation dudit ensemble mobile, au-dessus de la table d'assemblage (5), entre deux positions extrêmes dans chacune desquelles les cylindres (10, 11) et le rouleau (9) sont posi-tionnés avec leurs axes perpendiculaires à la direction de déplacement longitudinal de l'ensemble mobile (6, 7).

## Claims

1. Process of assembling two films (1, 2) in particular such as have a thickness of several microns, by heat-sealing, of the type consisting in offering up the films with their plane surface opposite one another, with the edges to be assembled being substantially aligned, and in inserting between said films a longitudinal assembly tape intended to bring about the assembly, said process being characterised in that it consists:

– in causing a first film (1) to open out along its longitudinal direction while bordering a longitudinal edge of said film by means of an assembly tape (3),

– in attaching a flat tape (4), the so-called positioning tape, to the face of assembly tape (3) opposite the first film (1),

– in using said positioning tape (4) in order to ensure manipulation of the first film (1) and alignment of the bordered longitudinal edge opposite a longitudinal edge of a second film (2),

– in causing the second film to open out along its longitudinal direction while separating in step with this opening out the flat positioning tape (4) of assembly tape (3) sealed to the first film and in assembling in a second stage the longitudinal edge of the second film (2) with the outer face of assembly tape (3) thus released.

2. Process according to claim 1 consisting in the use of an assembly tape (3) folded on to itself about a longitudinal folding axis and comprising in this folded position two inner faces opposite one another, which do not adhere to one another, and two opposite faces capable of adhering to the films to be assembled and to the flat positioning tape (4).

3. Process according to one of claims 1 or 2, consisting in the use of a positioning tape (4) of an identical material as that of assembly tape (3), said process being characterised in that it consists in heating a section of the first film (1) and of assembly tape (3) to a set temperature enabling their assembly, and in partly cooling the section thus assembled prior to assembly with positioning tape (4) so as to achieve a state of simple bonding between said assembly tape and said positioning tape.

4. Process according to one of claims 1, 2 or 3 for assembling polyester films, characterised in that it consists in the use of a folded assembly tape (3) made of polyester, which possesses outer faces coated at a temperature lower than the melting temperature of the polyester with a resin capable of reactivation by heat, as well as of a positioning tape (4) made of polyester.

5. Process according to claim 4 for assembling two polyester films with a thickness substantially between 3 and 5 microns, characterised in that it consists in the use of an assembly tape (3) with a thickness substantially between 10 and 15 microns, the outer faces of which are covered with a polyester resin capable of reactivation by heat, as well as of a positioning tape (4) with a thickness of several tens of microns.

6. Process according to one of claims 1, 2, 3, 4 or 5 for assembling two gores with a view to producing an envelope from longitudinal gores shaped in accordance with the shape of the envelope, characterised in that it consists:

– in causing a first gore to open out on a longitudinal base (5) while bordering at least one of its longitudinal edges by means of an assembly tape (3) and a positioning tape (4),

– in causing a second gore to open out on the longitudinal base with one of its edges aligned with a bordered edge of the first gore and in simultaneously bringing about during this opening out process:

. assembly of said aligned edges of the first and second gores, following separation of positioning tape (4) and assembly tape (3).

. bordering the other longitudinal edge of the second gore by means of an assembly tape (3) and a positioning tape (4).

7. Process according to claim 6 for producing an envelope, characterised in that it consists:

– in causing a gore to open out while bordering the two longitudinal edges of said gore by means of an assembly tape (3) and a flat positioning tape (4),

– in aligning by means of the flat positioning tape (4) one of the longitudinal edges of said gore opposite a longitudinal edge of a second gore,

– in causing the second gore to open out while assembling, after separation of positioning tape (4), the opposite edges of the first and second gores and simultaneously bordering the free edge of said second gore by means of an assembly tape (3) and a flat positioning tape (4),

– in repeating this operation for all except one of the gores to be assembled,

– in disengaging the free bordered edges of the first and of the second gores and in assembling, after separation of positioning tape (4), said edges with a last unedged gore which has been caused to open out.

8. Device for assembling two films (1, 2) of the type comprising an assembly table (5) intended for opening out the films, means (9) for feeding a film, means (24, 25, 27) for feeding a reinforcing band (3, 4) and a mobile assembly (6, 7) capable of longitudinal displacement above assembly table (5) and equipped, on the one hand, with positioning means (10, 11, 26, 33, 34) designed for aligning the edges to be assembled of films (1, 2) with reinforcing band (3, 4), and, on the other hand, means for heat-sealing (14, 15, 16, 17) said films and reinforcing band, said device being characterised in that:

– the means (24, 25, 27) for feeding reinforcing band (3, 4) consist in means (24, 25) for feeding an assembly tape (3) and means (27) for feeding a flat tape, the so-called positioning tape,

– heat-sealing means (14, 15, 16, 17) are designed for:

. sealing assembly tape (3) to the longitudinal edge of a film (1), the so-called first film,

. sealing positioning tape (4) to the longitudinal edge of a film (12), the so-called second film, on the face of assembly tape (3) opposite the first film (1),

– positioning means (10, 11, 26, 33, 34) comprise:

. guiding means (10, 11, 26) designed for positioning in identical alignment a longitudinal edge of the first film (1), assembly tape (3) and positioning tape (4),

. means (33, 34) for positioning positioning tape (4) designed so as to position in identical alignment the longitudinal edge of the first film (1), bordered by means of assembly tape (3) and positioning tape (4), and an edge to be assembled of the second film (2),

– means (31, 35, 36, 37) for separating positioning tape (4) and assembly tape (3) are provided on mobile assembly (6, 7) with a view to separating said assembly tape (3) and positioning tape (4) so as to enable assembling the edges of the two films (1, 2) aligned with the aid of a means for positioning (33, 34) positioning tape (4).

9. Device according to claim 8, characterised in that the guiding means (10, 11, 26) comprise two cylinders (10, 11) spaced at a given distance and between which each film is caused to unwind during its opening out, so that it has one surface in contact with one and the other cylinder (10, 11).

10. Device according to claim 9, characterised in that each cylinder (10, 11) comprises on its periphery two rings (12, 13) made of metallic material, spaced at a distance approximately equal to the width of one film and thermally insulated from the peripheral wall of said cylinders.

11. Device according to claim 10, characterised in that the heat-sealing means (14, 15, 16, 17) comprise annular heaters (14, 15) connected to a system of ducts for feeding hot air and situated in the immediate proximity of the peripheral wall of cylinders (10, 11) opposite rings (12, 13).

12. Device according to claim 11, characterised in that the temperature of annular heaters (14, 15) is lower than the assembly temperature, said annular heaters being associated with heating nozzles (16, 17) located opposite rings (12, 13) and supplied with hot air, the temperature of which is suitable for enabling assembly.

13. Device according to one of the preceding claims, characterised in that means (24, 25) for feeding assembly tape (3) comprise a folding device (25) designed to supply an assembly tape (3) folded on to itself about a longitudinal axis.

14. Device according to claim 10, characterised in that positioning means (33, 34) of positioning tape (4) comprise:

– two guiding devices substantially situated in alignment with a ring (13) of cylinder (11) and having two guiding surfaces (33, 34) opposite one another, spaced at a distance equivalent to the width of positioning tape (4), positioning of said tape being brought about between said guiding surfaces,

– a pin (32) extending at right angles to the guiding surfaces so as to be lodged within the fold of assembly tape (3) while positioning tape (4) is positioned between said guiding surfaces.

15. Device according to claim 14, characterised in that the separation means (31, 35, 36, 37) of positioning tape (4) comprise:

– a pin (31) connecting the two guiding surfaces (33, 34) and about which positioning tape (4) is wound by a half turn,

– returning means (35) located upstream of pin (31) and designed to enable the return of positioning tape (4) towards the end of the assembly table located upstream of mobile assembly (6, 7),

– means for attaching the positioning tape to the end of the assembly table.

16. Device according to claim 15, characterised in that the returning means consist in two guiding fingers (35) with longitudinal intersecting axes forming a substantially right angle.

17. Device according to claim 14, characterised in that separation means (31, 35, 36, 37) of positioning tape (4) comprise:

– a pin (31) connecting the two guiding surfaces and about which the positioning tape is wound by half a turn,

– a receiving spool (36) designed to enable repackaging of positioning tape (4) and associated with rotating driving means (37) controlled by the speed at which mobile assembly (6, 7) is displaced.

18. Device according to claim 9, in which the film is presented in the shape of a roller (9) and assembly tape (3) and positioning tape (4) are presented in the form of spools (24, 27), said roller and spools being carried by mobile assembly (6, 7).

19. Device according to claim 18, characterised in that it comprises means (18–22) for stopping the rotation of cylinders (10, 11) and roller (9), designed to stop, synchronously, said cylinders and roller when displacement of the mobile assembly (6, 7) ceases.

20. Device according to claim 19, characterised in that stopping means (18–22) comprise:

– three pulleys (18) secured, respectively, in the extension of the shaft of each cylinder (10, 11) and roller (9),

– a belt (19) connecting the three pulleys (18) and having ends secured to mobile assembly (6, 7),

– two returning pulleys (20) positioned against belt (19) and connected by a traverse (21),

– means (22) for vertically displacing traverse (21) and designed to bring about displacement of said traverse with a view to stretching belt (19) when displacement of mobile assembly (6, 7) ceases.

21. Device according to claims 12 and 21 jointly, characterised in that it comprises control means connected with the controller for stopping displacement of mobile assembly (6, 7) and designed to bring about, when said mobile assembly is stopped,

– the cessation of the air feed to heating nozzles (16, 17),

– operation of the means (22) for vertical displacement of traverse (21).

22. Device according to claim (18), characterised in that it comprises means for driving (28, 29, 30) the mobile assembly in rotary manner, designed to enable rotation of said mobile assembly above assembly table (5), between two end positions, in each of which cylinders (10, 11) and roller (9) are positioned with their axes at right angles to the direction of longitudinal displacement of mobile assembly (6, 7).

**Patentansprüche**

1. Verfahren zum Zusammenfügen durch Heißsiegeln von zwei Filmen (1, 2), insbesondere mit einer Dicke von einigen Mikron, der Art, die darin besteht, daß die Filme mit ihren ebenen Oberflächen einander gegenüber zugeführt werden, wobei die zusammenzufügenden Ränder im wesentlichen ausgerichtet sind, sowie darin, daß zwischen den besagten Filmen ein Längsverbindungsband mit der Aufgabe die Zusammenfügung zu bewirken eingeführt wird, wobei das besagte Verfahren dadurch gekennzeichnet ist, daß es darin besteht,

– daß ein erster Film (1) dazu veranlaßt wird, sich entlang seiner Längsrichtung auszulegen, wobei ein Längsrand des besagten Filmes mit Hilfe eines Verbindungsbandes (3) gebördelt wird,

– daß ein flaches Band (4), das sogenannte Positionierband, auf der dem ersten Film (1) gegenüberliegenden Seite des Verbindungsbandes (3) angebracht wird,

– daß das besagte Positionierband (4) verwendet wird, um Manipulation des ersten Filmes (1) und Ausrichtung des gebördelten Längsrandes gegenüber eines Längsrandes eines zweiten Filmes (2) zu gewährleisten,

– daß der zweite Film dazu veranlaßt wird, sich entlang seiner Längsrichtung auszulegen, wobei das flache Positionierband (4) des an dem ersten Film angeschweißten Verbindungsbandes (3) im Einklang mit der besagten Auslegung getrennt und in einer zweiten Stufe der Längsrand des zweiten Filmes (2) mit der auf diese Weise frei gewordenen Außenseite des Verbindungsbandes (3) verbunden wird.

2. Verfahren nach Anspruch 1, darin bestehend, daß von einem Verbindungsband (3) Gebrauch gemacht wird, das um eine der Länge nach verlaufende Achse auf sich selbst gefaltet ist und in dieser gefalteten Lage zwei gegenüber befindliche Innenflächen aufweist, von denen die eine nicht an der anderen anhaftet, sowie zwei gegenüberliegende Flächen, die so beschaffen sind, daß sie an den zusammenzufügenden Filmen und dem flachen Positionierband (4) anhaften.

3. Verfahren nach einem der Ansprüche 1 oder 2, darin bestehend, daß von einem Positionierband (4) aus einem gleichen Material wie dem des Verbindungsbandes (3) Gebrauch gemacht wird, wobei das besagte Verfahren dadurch gekennzeichnet ist, daß es in der Erhitzung eines Abschnitts des ersten Filmes (1) und des Verbindungsbandes (3) auf eine vorgegebene Temperatur besteht, die so beschaffen ist, daß sie deren Zusammenfügen gestattet, sowie darin, daß der auf diese Weise zusammengefügte Abschnitt vor dem Zusammenfügen mit dem Positionierband (4) zum Teil gekühlt wird, so daß man einen Zustand einfacher Bindung zwischen dem besagten Verbindungsband und dem besagten Positionierband bewirkt.

4. Verfahren nach einem der Anpsrüche 1, 2 oder 3 zum Zusammenfügen von Filmen aus Polyester, dadurch gekennzeichnet, daß es in dem Gebrauch eines gefalteten Verbindungsbandes (3) aus Polyester besteht, dessen Außenflächen mit einem bei einer niedrigeren Temperatur als der Schmelztemperatur des Polyesters durch Wärme reaktivierbaren Harz überzogen sind, sowie von einem Positionierband (4) aus Polyester.

5. Verfahren nach Anspruch 4 zum Zusammenfügen von zwei Polyesterfilmen mit einer Dicke von im wesentlichen zwischen 3 und 5 Mikron, dadurch gekennzeichnet, daß es im Gebrauch eines Verbindungsbandes (3) mit einer Dicke im wesentlichen zwischen 10 und 15 Mikron, dessen Außenflächen mit einem durch Wärme reaktivierbaren Polyesterharz überzogen sind, sowie eines Positionierbandes (4) mit einer Dicke im Bereiche von einigen Dutzend Mikron besteht.

6. Verfahren nach einem der Ansprüche 1, 2, 3, 4 oder 5 zum Zusammenfügen von zwei Bahnen zwecks Herstellung einer Umhüllung aus Längsbahnen, deren Formen der Umhüllungsform entsprechen, dadurch gekennzeichnet, daß es darin besteht,
– daß eine erste Bahn auf einer Längsgrundlage (5) zur Auslegung gebracht wird, wobei mindestens einer ihrer Längsränder mit Hilfe eines Verbindungsbandes (3) und eines Positionierbandes (4) gebördelt wird,
– daß eine zweite Bahn zur Auslegung auf der Längsgrundlage gebracht wird, wobei einer ihrer Ränder mit einem gebördelten Rand der ersten Bahn ausgerichtet ist, und daß gleichzeitig während dieser Auslegung
. Zusammenfügen der besagten ausgerichteten Ränder der ersten und der zweiten Bahn nach Trennung des Positionierbandes (4) und des Verbindungsbandes (3),
. Bördelung des zweiten Längsrandes der zweiten Bahn mit Hilfe eines Verbindungsbandes (3) und eines Positionierbandes (4) bewirkt wird.

7. Verfahren nach Anspruch 6 zur Herstellung einer Umhüllung, dadurch gekennzeichnet, daß sie darin besteht,
– daß eine Bahn zur Auslegung gebracht wird, wobei die beiden Längsränder der besagten Bahn mit Hilfe eines Verbindungsbandes (3) und eines flachen Positionierbandes (4) gebördelt werden,
– daß mit Hilfe des flachen Positionierbandes (4) einer der Längsränder der besagten Bahn gegenüber einem Längsrand einer zweiten Bahn ausgerichtet wird,
– daß die zweite Bahn zur Auslegung gebracht wird, wobei nach Trennung des Positionierbandes (4) die gegenüberliegenden Ränder der ersten und der zweiten Bahn zusammengefügt werden und gleichzeitig der freie Rand der besagten zweiten Bahn mit Hilfe eines Verbindungsbandes (3) und eines flachen Positionierbandes (4) gebördelt wird,
– daß diese Operation für die Gesamtheit weniger eins der zusammenzufügenden Bahnen wiederholt wird,
– daß die freien gebördelten Ränder der ersten und der letzten Bahn separiert werden und die besagten Ränder nach Trennung des Positionierbandes (4) gemeinsam mit einer letzten nicht gebördelten Bahn zu Auslegung gebracht werden.

8. Vorrichtung zum Zusammenfügen von zwei Filmen (1, 2) der Art umfassend einen Zusammenfügetisch (5) für die Auslegung der Filme, Mittel (9) für die Filmzustellung, Mittel (24, 25, 27) für die Zustellung von Verstärkungsband (3, 4) und eine bewegliche Baugruppe (6, 7), die so beschaffen ist, daß sie sich der Länge nach oberhalb des Zusammenfügetisches (5) verlagert und einerseits Positioniermittel (10, 11, 26, 33, 34) trägt, die so beschaffen sind, daß sie die zusammenzufügenden Ränder der Filme (1, 2) und das Verstärkungsband (3, 4) ausrichten, und andererseits Mittel (14, 15, 16, 17) zum Warmsiegeln der besagten Filme und des Verstärkungsbandes, wobei die besagte Vorrichtung dadurch gekennzeichnet ist,
– daß die Mittel zum Zustellen (24, 25, 27) des Verstärkungsbandes (3, 4) Mittel (24, 25) zum Zustellen eines Zusammenfügebandes (3) und Mittel (27) zum Zustellen eines flachen Bandes, des sogenannten Positionierbandes, umfassen,
– daß die Mittel zum Warmsiegeln (14, 15, 16, 17) so beschaffen sind,
. daß sie das Verbindungsband (3) auf den Längsrand eines Filmes (1), des sogenannten ersten Filmes, aufschweißen,
. daß sie das Positionierband (4) oder den Längsrand eines Filmes (2), des sogenannten zweiten Filmes, auf die dem ersten Film (1) gegenüberliegende Seite des Verbindungsbandes (3) aufschweißen,
– daß die Positioniermittel (10, 11, 26, 33, 34) folgende Teile umfassen:
. Führungsmittel (10, 11, 26), die so beschaffen sind, daß sie einen Längsrand des ersten Filmes (1), das Verbindungsband (3) und das Positionierband (4) in die gleiche Ausrichtung bringen,
. Mittel (33, 34) zum Positionieren des Positionierbandes (4), die so beschaffen sind, daß sie den Längsrand des mit Verbindungsband (3) und Positionierband (4) gebördelten ersten Filmes (1) mit einem zum Zusammenfügen bestimmten Rand des zweiten Filmes (2) in gleiche Ausrichtung bringen,
– daß Mittel (31, 35, 36, 37) zum Trennen des Positionierbandes (4) und des Verbindungsbandes (3) an der beweglichen Baugruppe (6, 7) angeordnet sind, um die besagten Verbindungs- (3) und Positionierbänder (4) zu trennen, so daß das Zusammenfügen der mit Hilfe der Positioniermittel (33, 34) des Positionierbandes (4) ausgerichteten Filme (1, 2) ermöglicht wird.

9. Vorrichtung nach Anspruch 8, dadurch gekennzeichnet, daß die Führungsmittel (10, 11, 26) zwei in einem vorgegebenen Abstand angeordnete Zylinder (10, 11) umfassen, zwischen denen Ablauf jedes Films während dessen Auslegung bewirkt wird, so daß eine Oberfläche mit dem einen und dem anderen Zylinder (10, 11) in Kontakt ist.

10. Vorrichtung nach Anspruch 9, dadurch gekennzeichnet, daß jeder Zylinder (10, 11) an seinem Umfang zwei Ringe (12, 13) aus metallischem Werkstoff umfaßt, die in einem der Breite eines Films annähernd gleichen Abstand angeordnet und in thermischer Hinsicht von der Außenwand der besagten Zylinder isoliert sind.

11. Vorrichtung nach Anspruch 10, dadurch gekennzeichnet, daß die Warmsiegelungsmittel (14, 15, 16, 17) ringförmige Erhitzer (14, 15) umfassen, die an einer Rohrleitung für die Zufuhr von Heißluft angeschlossen und in unmittelbarer Nähe der Außenwand der Zylinder (10, 11) gegenüber den Ringen (12, 13) angeordnet sind.

12. Vorrichtung nach Anspruch 11, dadurch gekennzeichnet, daß die Temperatur der ringförmigen Erhitzer (14, 15) geringer ist als die Zusammenfügungstemperatur, wobei die besagten ringförmigen Erhitzer mit den Ringen (12, 13) gegenüber befindlichen Heizdüsen (16, 17) in Verbindung stehen, die mit Heißluft versorgt werden, deren Temperatur so beschaffen ist, daß sie das Zusammenfügen ermöglicht.

13. Vorrichtung nach einem der vorstehenden Ansprüche, dadurch gekennzeichnet, daß die Mittel (24, 25) zum Zustellen des Verbindungsbandes (3) ein Faltelement (25) umfassen das so beschaffen ist, daß ein Verbindungsband (3) in um eine Längsachse an sich gefalteter Form geliefert wird.

14. Vorrichtung nach Anspruch 10, dadurch gekennzeichnet, daß die Positioniermittel (33, 34) des Positionierbandes (4) folgende Teile umfassen:
— Zwei im wesentlichen in der Fluchtlinie eines Ringes (13) eines Zylinders (11) angeordnete Führungselemente, die zwei gegenüberliegende Führungsflächen (33, 34) umfassen, wobei die besagten Führungsflächen in einem der Breite des Positionierbandes (4) gleichen Abstand angeordnet sind und zwischen denen das besagte Band positioniert wird,
— einen Stift (32), der sich im rechten Winkel zu den Führungsflächen erstreckt, so daß er während des Positionierens des Positionierbandes (4) zwischen den besagten Führungsflächen in der Falte des Verbindungsbandes (3) angeordnet ist.

15. Vorrichtung nach Anspruch 14, dadurch gekennzeichnet, daß die Trennungsmittel (31, 35, 36, 37) des Positionierbandes (4) folgende Teile umfassen:
— Einen Stift (31), der die beiden Führungsflächen (33, 34) verbindet und um den das Positionierband (4) um eine halbe Umdrehung gewickelt wird,
— nach dem Stift (31) angeordnete Rückführmittel (35), die so beschaffen sind, daß sie Rückführung des Positionierbandes (4) zum Ende des vor der beweglichen Baugruppe (6, 7) angeordneten Zusammenfügetisches gestatten,
— Mittel zur Befestigung des Positionierbandes am Ende des Zusammenfügetisches.

16. Vorrichtung nach Anspruch 15, dadurch gekennzeichnet, daß die Rückführmittel in zwei Leitfingern (35) bestehen, deren einander schneidende Längsachsen einen im wesentlichen rechten Winkel einschließen.

17. Vorrichtung nach Anspruch 14, dadurch gekennzeichnet, daß die Trennmittel (31, 35, 36, 37) des Positionierbandes (4) folgende Teile umfassen:
— Einen Stift (31), der die beiden Führungsflächen verbindet und um den das Positionierband um eine halbe Umdrehung gewickelt wird,
— eine Aufnahmespule (36), die so beschaffen ist, daß sie Aufwickeln des Positionierbandes (4) gestattet, und die mit Mitteln (37) für rotierenden Antrieb in Verbindung steht, wobei diese Mittel durch die Verstellgeschwindigkeit der beweglichen Baugruppe (6, 7) gesteuert werden.

18. Vorrichtung nach Anspruch 9, bei der der Film in der Form einer Rolle (9) und die Verbindungs- (3) und Positionierbänder (4) in der Form von Spulen (24, 27) dargeboten werden, wobei die besagte Rolle und die besagten Spulen auf der beweglichen Baugruppe (6, 7) angeordnet sind.

19. Vorrichtung nach Anspruch 18, dadurch gekennzeichnet, daß sie Mittel (18–22) zum Abbremsen im rotierenden Zustand der Zylinder (10, 11) und der Rolle (9) umfaßt, die so beschaffen sind, daß sie die besagten Zylinder und die Rolle gleichzeitig abbremsen, wenn die Verlagerung der beweglichen Baugruppe (6, 7) unterbrochen wird.

20. Vorrichtung nach Anspruch 19, dadurch gekennzeichnet, daß die Abbremsmittel (18–22) folgende Teile umfassen:
— Drei Riemenscheiben (18), die in der Verlängerung der Spindel jedes Zylinders (10, 11) bzw. der Rolle (9) angeordnet sind,
— einen Riemen (19), der die drei Riemenscheiben (18) verbindet und an der beweglichen Baugruppe (6, 7) befestigte Enden besitzt,
— zwei Rückführriemenscheiben (20), die in Kontakt mit dem Riemen (19) angeordnet und durch eine Hebelvorrichtung (21) miteinander verbunden sind,
— Mittel (22) für die senkrechte Verlagerung der Hebelvorrichtung (21), die so beschaffen sind, daß sie Verlagerung der besagten Hebelvorrichtung bewirken, um Band (19) zu spannen, wenn die Verlagerung der beweglichen Baugruppe (6, 7) unterbrochen wird.

21. Vorrichtung nach den Ansprüchen 12 und 21 gemeinsam, dadurch gekennzeichnet, daß sie Steuerungsmittel umfaßt, die mit der Steuerung zum Unterbrechen der Verlagerung der beweglichen Baugruppe (6, 7) in Verbindung stehen und so beschaffen sind, daß beim Anhalten der besagten beweglichen Baugruppe
— Unterbrechung der Luftzufuhr zu den Heizdüsen (16, 17),
— Betätigung der Mittel (22) für die senkrechte Verlagerung der Hebelvorrichtung (21) bewirkt wird.

22. Vorrichtung nach Anspruch 18, dadurch gekennzeichnet, daß sie Mittel (28, 29, 30) zum rotierenden Antrieb der beweglichen Baugruppe umfaßt, die so beschaffen sind, daß sie Drehung der besagten beweglichen Baugruppe oberhalb des Zusammenfügetisches (5) zwischen zwei Endlagen gestatten, in jeder von denen die Zylinder (10, 11) und die Rolle (9) mit ihren Achsen senkrecht zu der Längsverlagerungsrichtung der beweglichen Baugruppe (6, 7) stehen.

EP 0 241 957 B1

Fig. 1

Fig. 2

Fig. 3a

Fig. 3b

Fig. 3c

Fig. 3d

Fig. 3e

Fig. 4

EP 0 241 957 B1

Fig. 5

Fig. 6